# EUROPÄISCHE PATENTANMELDUNG

(11) **EP 1 637 955 A1**
(43) Veröffentlichungstag der Anmeldung: **22.03.2006**
(21) Anmeldenummer: 04021927.1
(22) Anmeldetag: 15.09.2004
(51) Int. Cl.: G06F 1/00

(54) **Erzeugung aktualisierbarer anonymisierter Datensätze für Test- und Entwicklungszwecke**

(71) Anmelder: UBS AG, 8001 Zürich (CH)
(72) Erfinder: Dünki,Peter, CH-8004,Zürich (CH); Frei, Christoph, CH-5400 Baden (CH)
(74) Vertreter: Röthinger, Rainer

(57) **Zusammenfassung**

Es wird ein Mechanismus zum computergestützten Erzeugen von anonymisierten Datensätzen für das Entwickeln und Testen von Anwendungsprogrammen, die für den Einsatz in einem produktiven Netzwerk (12) bestimmt sind, beschrieben. Ein erfindungsgemäßes Verfahren umfasst das Bereitstellen wenigstens einer produktiven Datenbank (14) mit Datensätzen, welche zu anonymisierende produktive Datenelemente enthalten, das Bereitstellen wenigstens einer nicht-produktiven Datenbank (22) mit Datensätzen, welche ebenfalls Datenelemente enthalten, das Erzeugen einer Zuordnung zwischen Datensätzen der nicht-produktiven Datenbank (22) und Datensätzen der produktiven Datenbank (14) sowie das Erzeugen eines anonymisierten Datensatzes durch Ersetzen der zu anonymisierenden Datenelemente eines Datensatzes aus der produktiven Datenbank (14) mit den Datenelementen eines zugeordneten Datensatzes aus der nicht-produktiven Datenbank (22). Die Zuordnung bleibt bei einem späteren Erzeugen neuer anonymisierter Datensätze und/oder bei einer Aktualisierung der bereits erzeugten anonymisierten Datensätze aufrecht erhalten, um die Testdaten pflegen zu können und um eine einfachere Fehleranalyse zu ermöglichen.

## Beschreibung

### Gebiet der Erfindung

Die Erfindung betrifft das Gebiet der Datenanonymisierung. Genauer gesagt betrifft die Erfindung das Erzeugen anonymisierter Datensätze für das Entwickeln und Testen von Computeranwendungen (nachfolgend als Anwendungen bezeichnet).

### Hintergrund der Erfindung

Das Entwickeln und Testen neuer Anwendungen erfordert das Vorhandensein von Daten, welche von den neuen Anwendungen bei Probeläufen verarbeitet werden können. Um den Ergebnissen der Probeläufe einen verlässlichen Aussagegehalt beimessen zu können, ist es unerlässlich, dass die bei den Probeläufen verarbeiteten Daten in technischer Hinsicht (z.B. was das Datenformat angeht) denjenigen Daten entsprechen, welche von den neuen Anwendungen im Anschluss an die Entwicklungs- und Testphase verarbeitet werden sollen. Aus diesem Grund werden im Rahmen der Probeläufe häufig diejenigen Anwendungsdaten, welche von den gegenwärtig produktiven (Vorgänger-)Versionen der zu entwickelnden oder zu testenden Anwendungen erzeugt wurden, verwendet. Diese Daten, im Folgenden als produktive Anwendungsdaten oder einfach als produktive Daten bezeichnet, sind üblicherweise datensatzweise in Datenbanken abgelegt.

Der Einsatz produktiver Anwendungsdaten für Entwicklungs- und Testzwecke ist in der Praxis nicht unproblematisch. So hat sich herausgestellt, dass die den Entwicklern aufgrund ihrer jeweiligen Autorisierung in der produktiven Umgebung zur Verfügung stehenden Datenräume oftmals nicht groß genug sind, um verlässliche Ergebnisse zu erhalten. Auch variieren aufgrund der personenbezogenen Datenraumautorisierungen die Ergebnisse von Probeläufen von Entwickler zu Entwickler. Zwar ließe sich die Datenraum-Autorisierung einzelner Personen für die Probeläufe temporär erweitern; diese Maßnahme ist jedoch aufwändig und insbesondere bei sensiblen oder vertraulichen Daten nicht ohne weitere Überprüfungen oder Einschränkungen möglich.

Ein anderer Ansatz hinsichtlich der Verwendung sensibler oder vertraulicher produktiver Anwendungsdaten im Rahmen von Probeläufen besteht darin, die Probeläufe an einem abgeschotteten und zugriffsgeschützten zentralen Erprobungssystem durchzuführen. Der mit der Einrichtung eines solchen zentralen Erprobungssystems verbundene technische Aufwand ist jedoch hoch. Zudem gestattet eine solche Vorhergehensweise keine Datenlieferung auf (dezentrale) Entwicklungs- und Testsysteme zur Fehleranalyse.

Die oben erläuterten und weitere Nachteile haben zu der Erkenntnis geführt, dass die Verwendung produktiver Daten für Entwicklungs- und Testzwecke in vielen Fällen ausscheidet. Es wurde daher nach einer Alternative für die Verwendung produktiver Daten gesucht. Diese Alternative sollte einerseits hinsichtlich des Datenformats, des Dateninhalts, usw. ein realistisches Abbild der produktiven Daten darstellen. Auf der anderen Seite sollten die zusätzlichen technischen Vorkehrungen, insbesondere was den Schutz gegen unberechtigte Zugriffe anbelangt (Autorisierungsmechanismen, Firewalls, usw.), möglichst gering gehalten werden können.

Es hat sich herausgestellt, dass die oben aufgeführten Anforderungen durch Testdaten erfüllt werden, welche durch eine teilweise Anonymisierung (oder Maskierung) von produktiven Datensätzen erzeugt werden. Indem sensible Elemente der produktiven Daten anonymisiert werden, sinkt der potentielle Schaden, der bei unberechtigten Zugriffen zu befürchten wäre. Dies gestattet es, die Sicherheitsmechanismen zu lockern. Insbesondere können die Testdaten für Probeläufe und zur Fehleranalyse auf dezentrale Systeme geladen werden. Da aber andererseits die technischen Aspekte (Datenformat, usw.) der produktiven Anwendungsdaten durch einen geeignete Anonymisierungsmechanismus nicht oder nur geringfügig geändert werden müssen, bilden die anonymisierten Testdaten ein realistisches Abbild der produktiven Daten.

Das Anonymisieren eines Datensatzes kann dadurch erfolgen, dass die zu anonymisierenden Datenelemente gelöscht oder durch einen vordefinierten und für alle Datensätze identischen Standardtext überschrieben werden, während die nicht zu anonymisierenden Datenelemente unverändert beibehalten werden. Eine solche Vorhergehensweise führt zu anonymisierten Datensätzen, ohne dass sich (wesentliche) Änderungen des Datenformats ergeben würden. Es hat sich jedoch herausgestellt, dass Probeläufe unter Verwendung derart anonymisierter Datensätze nicht alle Schwachstellen der zu entwickelnden oder zu testenden Anwendung aufzeigen und bei ersten Einsätzen der Anwendung im produktiven Umfeld häufig noch Fehler auftreten.

Das Auftreten von Fehlern im produktiven Umfeld, die auf eine fehlerhafte Programmierung der Anwendung zurückzuführen sind, ist Beleg dafür, dass die bei den Probeläufen im Entwicklungs- und Testumfeld verwendeten anonymisierten Daten (noch) nicht in ausreichendem Maß mit den produktiven Daten übereinstimmen. Häufiger als im produktiven Umfeld treten programmiertechnische Fehler jedoch im Entwicklungs- und Testumfeld auf. Diese Tatsache erfordert das Vorhandensein effektiver Fehleranalysemechanismen.

Der Erfindung liegt die Aufgabe zugrunde, einen effizienten Ansatz für die Bereitstellung anonymisierter Testdaten anzugeben. Die Testdaten sollen aus den oben genannten Gründen ein möglichst getreues Abbild der produktiven Daten sein und außerdem eine zuverlässige Fehleranalyse ermöglichen. Insgesamt ist der Aussagegehalt von Probeläufen unter Verwendung der anonymisierten Testdaten zu verbessern und die Ausfallwahrscheinlichkeit neu entwickelter oder weiterentwickelter Anwendungen im produktiven Umfeld zu optimieren.

### Kurzer Abriss der Erfindung

Diese Aufgabe wird gemäß einem ersten Aspekt der Erfindung durch ein Testdaten-Anonymisierungsverfahren gelöst, das anonymisierte Datensätze für das Entwickeln und Testen von Anwendungsprogrammen erzeugt, die für den Einsatz in einem produktiven Umfeld bestimmt sind. Das Verfahren umfasst die Schritte des Bereitstellens wenigstens einer produktiven Datenbank mit Datensätzen, welche zu anonymisierende produktive Datenelemente enthalten, des Bereitstellens wenigstens einer nicht-produktiven Datenbank mit Datensätzen, welche ebenfalls Datenelemente enthalten, des Erzeugens einer Zuordnung zwischen Datensätzen der nicht-produktiven Datenbank und Datensätzen der produktiven Datenbank und des Erzeugens anonymisierter Datensätze durch Ersetzen zu anonymisierender Datenelemente von Datensätzen aus der produktiven Datenbank mit Datenelementen von jeweils zugeordneten Datensätzen aus der nicht-produktiven Datenbank, wobei die einmal erzeugte Zuordnung bei einem (z.B. späteren) Erzeugen neuer anonymisierter Datensätze oder bei einer Aktualisierung der bereits erzeugten anonymisierten Datensätze aufrechterhalten bleibt.

Die Aufrechterhaltung der Zuordnung erleichtert in den meisten Fällen die Fehleranalyse und ermöglicht ferner eine individuelle Aktualisierung bereits erzeugter anonymisierter Datensätze. Die Aktualisierung anonymisierter Datensätze bindet in der Regel weniger Ressourcen als das Erzeugen komplett neuer anonymisierter Datensätze. Ferner gewährleistet der Aktualisierungsansatz, dass im Entwicklungs- und Testumfeld stets aktuelle Testdaten zur Verfügung stehen. Durch eine derartige Pflege der anonymisierten Datensätze lassen sich diese fortlaufend an die produktiven Datensätze angleichen.

Die Datensatz-Zuordnung kann derart erfolgen, dass eine nachträgliche Bestimmung des einem anonymisierten Datenelement oder Datensatz zugeordneten Datenelements oder Datensatzes aus der produktiven Datenbank möglich wird. Dieser Ansatz unterstützt die Fehleranalyse, da beispielsweise feststellbar wird, ob die bei Probeläufen auftretenden Fehler darauf zurückzuführen sind, dass bereits im produktiven Umfeld mit fehlerhaften Daten gearbeitet wurde.

Die Zuordnung zwischen einzelnen Datensätzen in der nicht-produktiven Datenbank und korrespondierenden Datensätzen in der produktiven Datenbank kann innerhalb des produktiven Umfelds erfolgen. Das produktive Umfeld kann ein produktives Computernetzwerk mit einer Mehrzahl von Netzwerk-Komponenten umfassen. In einem solchen Fall ist es denkbar, nur Netzwerk-Komponenten (bzw. damit arbeitenden Benutzer) einen Zugriff auf die Zuordnung einzuräumen, welche eine geeignete Autorisierung im produktiven Umfeld besitzen.

Parallel zum produktiven Umfeld kann ein nicht-produktives Umfeld vorgesehen sein, beispielsweise als Entwicklungs- und Testumgebung in Form eines Computernetzwerks. Das nicht-produktive Umfeld kann eine Testdatenbank mit den anonymisierten Datensätzen aufweisen. Zusätzlich oder alternativ zur Testdatenbank kann das nicht-produktive Umfeld die nicht-produktive Datenbank umfassen. Zweckmäßigerweise besteht aus dem nicht-produktiven Umfeld heraus kein Zugriff auf die Zuordnung. Mit anderen Worten, innerhalb des nicht-produktiven Umfelds ist es dann nicht mehr möglich, aus dem Inhalt eines anonymisierten Datensatzes (und/oder eines nicht-produktiven Datensatzes) auf einen bestimmten produktiven Datensatz zu schließen.

Die gegenseitige Zuordnung von Datensätzen aus der produktiven und aus der nicht-produktiven Datenbank kann auf unterschiedlichste Art und Weise erfolgen. Die Zuordnung kann beispielsweise auf einem deterministischen Mechanismus, etwa einem kryptographischen Verfahren oder einer Zuordnungstabelle, basieren. Findet eine Zuordnungstabelle Verwendung, kann diese zufallsbasiert erzeugt worden sein. Während folglich die Zuordnungstabelle ein deterministisches Schema darstellt, können die einzelnen Zuordnungen innerhalb der Zuordnungstabelle ausgelost sein.

Es ist erfindungsgemäß nicht erforderlich, dass jedem produktiven Datensatz auch ein nicht-produktiver Datensatz gegenübersteht. So kann die Anzahl der nicht-produktiven Datensätze geringer sein als die Anzahl der produktiven Datensätze. Zweckmäßigerweise ist jedoch zumindest den zu anonymisierenden produktiven Datensätzen jeweils genau ein nicht-produktiver Datensatz zugeordnet.

Wie bereits erläutert, können die anonymisierten Datensätze durch einen Aktualisierungsmechanismus gepflegt werden. So kann beispielsweise vorgesehen sein, dass die anonymisierten Datensätze in regelmäßigen Zeitintervallen aktualisiert werden. Zusätzlich oder alternativ hierzu kann auch eine benutzergesteuerte Aktualisierung erfolgen.

Der Ansatz, zur Erzeugung eines anonymisierten Datensatzes Datenelemente aus der produktiven Datenbank mit Datenelementen aus der nicht-produktiven Datenbank zu kombinieren, ermöglicht es, dass die nicht-produktive Datenbank Kopien von Datensätzen und/oder Datenelementen der produktiven Datenbank enthält. Diese Vorhergehensweise vereinfacht das Erstellen der nicht-produktiven Datenbank. Vor allem in Kombination mit einem eine ausreichende Anonymisierung gewährleistenden Zuordnungsschema zwischen produktiven und nicht-produktiven Datensätzen bleibt eine für viele Zwecke ausreichend hohe Anonymisierung gewährleistet.

Die nicht-produktive Datenbank kann ausschließlich oder zumindest teilweise Datensätze mit von den produktiven Datenelementen verschiedenen Datenelementen enthalten. In der Praxis wurde gefunden, dass eine ausreichende Anonymisierung jedenfalls dann noch gewährleistet ist, wenn der Anteil von Datensätzen mit von den produktiven Datenelementen verschiedenen Datenelementen in der nicht-produktiven Datenbank mindestens 5% beträgt. Vorzugsweise beträgt dieser Anteil 10% oder mehr.

Die von den produktiven Datenelementen verschiedenen Datenelemente in der nicht-produktiven Datenbank können einer öffentlich zugänglichen elektronischen Datenbank oder Datei entnommen werden. Je nach Typ, Format und Bedeutungsinhalt der zu anonymisierenden Datenelemente (und in Abhängigkeit von der zu entwickelnden oder zu testenden Anwendung) kommen unterschiedliche öffentlich zugängliche elektronische Datenbanken oder Dateien hierfür in Frage. Als geeignet haben sich beispielsweise elektronische Telefonbücher oder anderweitige elektronische Namens-und/oder Adressverzeichnisse erwiesen.

Den einzelnen Datenelementen von Datensätzen der produktiven Datenbank und von Datensätzen der nicht-produktiven Datenbank können jeweils Kennungen zugeordnet sein. Das Vorsehen der Kennungen ermöglicht es, die zu anonymisierenden produktiven Datenelemente durch Datenelemente aus der nicht-produktiven Datenbank mit korrespondierenden Kennungen zu ersetzen.

Die in der nicht-produktiven Datenbank enthaltenen Datenelemente können zumindest teilweise einen von einem Benutzer erfassbaren Bedeutungsinhalt haben. So kann es sich bei diesen Datenelementen (jedenfalls teilweise) um Texte, Bezeichnungen, Namen, Adressangaben usw. handeln. Gemäß einer Ausführungsform der vorliegenden Erfindung enthalten die in der produktiven und/oder die in der nicht-produktiven Datenbank enthaltenen Datenelemente Namens- und/oder Adressdaten.

Der erfindungsgemäße Anonymisierungsansatz liefert anonymisierte Datensätze, welche zum Entwickeln und Testen von Anwendungsprogrammen geeignet sind. Bei diesen Anwendungsprogrammen kann es sich um Programme handeln, welche Verarbeitungsschritte umfassen, die eine regelmäßige Aktualisierung der zu verarbeitenden Daten erfordern.

Die Erfindung kann als Software oder als Hardware oder als eine Kombination dieser beiden Aspekte ausgeführt sein. So wird gemäß einem weiteren erfindungsgemäßen Aspekt ein Computerprogrammprodukt mit Programmcodemitteln zum Durchführen des erfindungsgemäßen Verfahrens, wenn das Computerprogrammprodukt auf einem oder mehreren Computern ausgeführt wird, zur Verfügung gestellt. Das Computerprogrammprodukt kann auf einem computerlesbaren Datenträger gespeichert sein.

Gemäß einem Hardware-Aspekt der Erfindung wird ein Computersystem zum Erzeugen von anonymisierten Datensätzen für das Entwickeln und Testen von Anwendungsprogrammen, die für den Einsatz in einem produktiven Umfeld bestimmt sind, geschaffen. Das Computersystem umfasst wenigstens eine produktive Datenbank mit Datensätzen, welche zu anonymisierende produktive Datenelemente enthalten, wenigstens eine nicht-produktive Datenbank mit Datensätzen, welche ebenfalls Datenelemente enthalten, und einen programmierten Computer zum Erzeugen anonymisierter Datensätze, wobei eine Zuordnung zwischen Datensätzen in der nicht-produktiven Datenbank und Datensätzen in der produktiven Datenbank besteht, die bei einem Erzeugen neuer anonymisierter Datensätze oder bei einer Aktualisierung der bereits erzeugten anonymisierten Datensätze aufrechterhalten bleibt, und wobei der Computer einen anonymisierten Datensatz durch Ersetzen der zu anonymisierenden Datenelemente eines Datensatzes aus der produktiven Datenbank durch die Datenelemente eines zugeordneten Datensatzes aus der nicht-produktiven Datenbank erzeugt. Das Computersystem kann ferner eine Testdatenbank umfassen, in welcher die anonymisierten Datensätze abgelegt sind.

### Kurze Zusammenfassung der Zeichnungen

Weitere Vorteile und Ausgestaltungen der Erfindung werden nachfolgend unter Bezugnahme auf bevorzugte Ausführungsbeispiele sowie auf die beigefügten Zeichnungen näher erläutert. Es zeigt:
- Figur 1: ein Ausführungsbeispiel eines erfindungsgemäßes Computersystem zum Erzeugen anonymisierter Datensätze;
- Figur 2: ein schematisches Ablaufdiagramm des erfindungemäßen Verfahrens zum Erzeugen anonymisierter Datensätze;
- Figur 3: eine schematische Darstellung der Erzeugung anonymisierter Datensätze gemäß einem ersten Ausführungsbeispiel;
- Figur 4: einen bei dem ersten Ausführungsbeispiel zum Einsatz gelangenden Zuordnungsansatz;
- Figur 5: eine schematische Darstellung der Erzeugung anonymisierter Datensätze gemäß einem zweiten Ausführungsbeispiel; und
- Figur 6: einen bei dem zweiten Ausführungsbeispiel zum Einsatz gelangenden Zuordnungsansatz.

### Beschreibung bevorzugter Ausführungsbeispiele

Nachfolgend wird die Erfindung unter Bezugnahme auf bevorzugte Ausführungsbeispiele näher erläutert. Obwohl eines der erläuterten Ausführungsbeispiele auf die Erzeugung von anonymisierten Datensätzen mit realistischen Adressbildern gerichtet ist, ist darauf hinzuweisen, dass die Erfindung nicht auf dieses Einsatzgebiet beschränkt ist. Die Erfindung kann beispielsweise überall dort zum Einsatz gelangen, wo Anwendungen zuverlässig und mit einem effizienten Fehleranalysemechanismus getestet werden sollen.

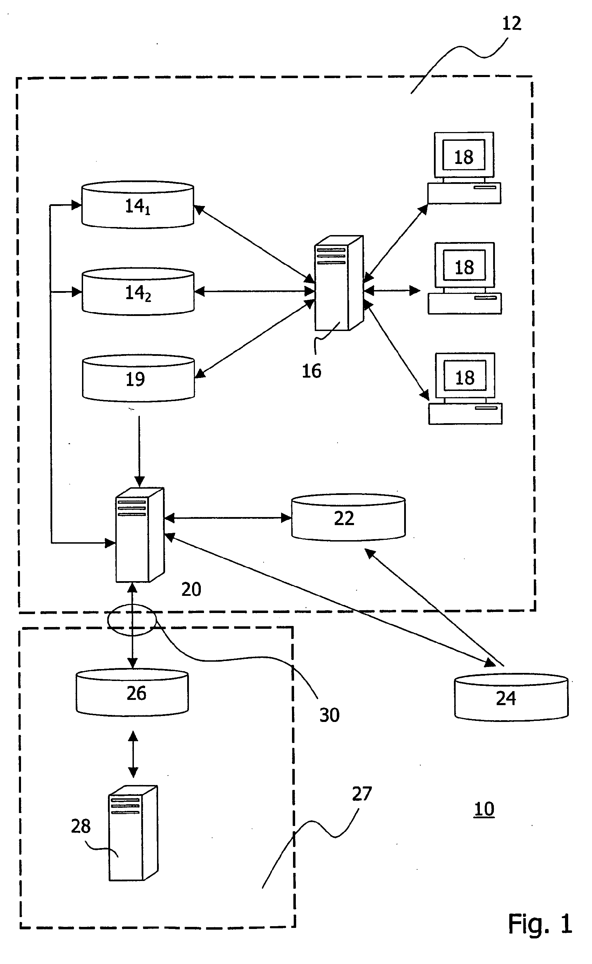

Fig. 1 zeigt ein Ausführungsbeispiel eines erfindungsgemäßen Computersystems 10 zum Erzeugen von anonymisierten Datensätzen für das Entwickeln und Testen von Anwendungsprogrammen. Bei den verschiedenen Ausführungsbeispielen sind übereinstimmende Elemente und Komponenten jeweils mit übereinstimmenden Bezugszeichen versehen.

Das Computersystem 10 umfasst gemäß dem in Fig. 1 dargestellten Ausführungsbeispiel ein produktives Computernetzwerk 12 mit einer Mehrzahl von produktiven Datenbanken 14, wenigstens einem Anwendungs-Server 16 sowie einer Vielzahl von Computerterminals 18. Auf dem Anwendungs-Server 16 laufen mehrere Anwendungsprogramme, deren Dienste der Anwendungs-Server 16 den Computerterminals 18 im produktiven Netzwerk 12 zur Verfügung stellt. Der Anwendungs-Server 16 ermöglicht außerdem als Datenbank-Server Zugriff auf in den produktiven Datenbanken 14 enthaltene (produktive) Datensätze. Die logisch zusammengehörenden Datenelemente (oder Daten) eines solchen Datensatzes können über mehrere produktive Datenbanken 14 verteilt sein. So können statische Datenelemente der produktiven Datensätze in einer ersten produktiven Datenbank 14₁ und nicht-statische Datenelemente der produktiven Datensätze in einer zweiten produktiven Datenbank 14₂ gespeichert und gepflegt werden. Das produktive Netzwerk 12 und insbesondere die produktiven Datenbanken 14 sind durch eine Reihe von Sicherheitsmechanismen gegen unbefugte Zugriffe geschützt. Diese Sicherheitsmechanismen beinhalten Authentisierungskonzepte sowie benutzerabhängige Datenraumautorisierungen.

In dem produktiven Netzwerk 12 wird von den auf dem Anwendungs-Server 16 laufenden Anwendungsprogrammen bestimmungsgemäßer Gebrauch gemacht. Dies bedeutet, dass ständig produktive Anwendungsdaten zwischen dem Anwendungs-Server 16 und den produktiven Datenbanken 14 einerseits und dem Anwendungs-Server 16 und den Computerterminals 18 andererseits transferiert werden. Diese produktiven Daten haben demgemäß eine durch die auf dem Anwendungs-Server 16 laufenden Anwendungsprogramme definierte Zweckbestimmung. So kann es sich bei den Anwendungsprogrammen um Maschinensteuerungen, um adressbasierte Anwendungen (z.B. zur Erzeugung von Drucksachen), um Komponenten eines ERP-(Enterprise Resource Planning) Systems, um ein CAD-(Computer Aided Design) Programm, usw. handeln. Die eigentliche Zweckbestimmung der Anwendungsdaten tangiert nicht den Umfang dieser Erfindung.

Ferner ist im produktiven Netzwerk 12 eine Zuordnungs-Komponente 19 vorhanden, welche im Ausführungsbeispiel gemäß Fig. 1 als Datenbank angedeutet ist und deren Funktion später genauer beschrieben wird. Je nach vorgesehenem Zuordnungsmechanismus kann die Zuordnungs-Komponente 19 auch als Datei, als kryptographische Programmroutine, usw. ausgebildet werden. Eine geeignete Autorisierung vorausgesetzt, kann mittels einiger der Computerterminals 18 über den Anwendungs-Server 16 auf die Zuordnungs-Komponente 19 zugegriffen werden.

In dem in Figur 1 dargestellten Beispielfall umfasst das Computersystem 10 ferner einen innerhalb des produktiven Netzwerks 12 angeordneten Anonymisierungscomputer 20 mit Zugriff auf die Zuordnungs-Komponente 19 sowie auf drei weitere Datenbanken, nämlich auf eine nicht-produktive Datenbank 22 mit z.B. historisierten produktiven Datensätzen (aus Gründen der Zugriffskontrolle noch im produktiven Netzwerk 12 angeordnet), eine öffentlich zugängliche elektronische Datenbank 24 mit öffentlichen Datensätzen sowie wenigstens eine Testdatenbank 26 mit anonymisierten Datensätzen. Der Anonymisierungscomputer 20 hat Lesezugriff auf die produktiven Datenbanken 14, die Zuordnungs-Komponente 19 und die öffentlich zugängliche elektronische Datenbank 24 sowie Schreib-/Lese-Zugriff auf die Historisierungs-Datenbank 22 und die Testdatenbank 26.

Der funktionale Unterschied zwischen den produktiven Datenbanken 14 und der nicht-produktiven Datenbank 22 besteht im Wesentlichen darin, dass die Inhalte der produktiven Datenbanken 14 durch den Anwendungsserver (fortlaufend) manipulierbar sind, während die nicht-produktive Datenbank 22 eine "Datenkonserve" darstellt, welche von den auf dem Anwendungsserver 16 laufenden Anwendungsprogrammen bei ihrem bestimmungsgemäßen Gebrauch nicht benötigt wird.

Die öffentlich zugängliche elektronische Datenbank 24 und die Testdatenbank 26 befinden sich in Figur 1 außerhalb des produktiven Netzwerks 12. Genauer gesagt ist die Testdatenbank 26 innerhalb eines Entwicklungs- und Testumfelds in Form eines Computer-Netzwerks 27 angeordnet. Eine Schnittstelle 30 ermöglicht ein Überführen anonymisierter Datensätze aus dem produktiven Netzwerk 12 in die Testdatenbank 26 und damit in das Netzwerk 27. Das Netzwerk 27 gleicht in seinem Aufbau dem produktiven Netzwerk 12 und umfasst einen Anwendungs-Server 28 für Entwicklungs- und Testzwecke. Der Anwendungs-Server 28 hat Zugriff auf die Testdatenbank 26. Die Testdatenbank 26 kann ähnlich wie die produktiven Datenbanken 14 strukturiert sein. Um ein optimales Testen neuer oder verbesserter Anwendungen zu ermöglichen, kann die Datenbank 26 einen identischen Aufbau wie die produktiven Datenbanken 14 besitzen. Dies kann erfordern, die Datenbank 26 in einzelne, physisch getrennte Datenbanken aufzuspalten.

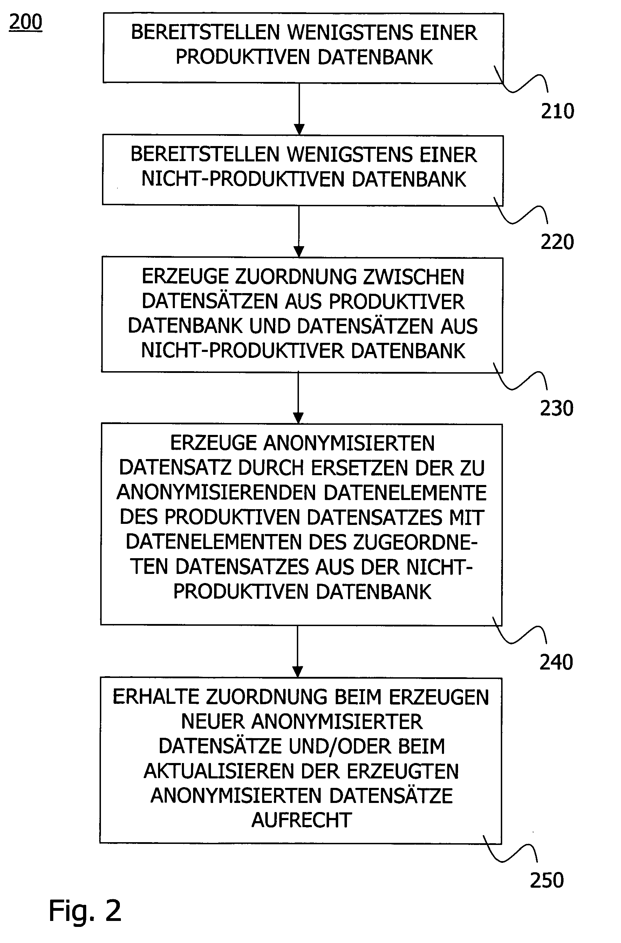

Die Funktionsweise des in Figur 1 dargestellten Computersystems 10 beim Erzeugen anonymisierter Datensätze gemäß dem erfindungsgemäßen Anonymisierungsverfahren wird nun unter Bezugnahme auf das in Figur 2 dargestellte Flussdiagramm 200 näher erläutert.

Das Verfahren beginnt mit dem Bereitstellen der produktiven Datenbanken 14 sowie wenigstens einer nicht-produktiven Datenbank 22 in den Schritten 210 und 220. In den Datenbanken 14, 22 sind produktive und nicht-produktive Datensätze enthalten, die jeweils aus einzelnen Datenelementen bestehen. Einzelne der in den produktiven Datensätzen enthaltenen Datenelemente sind zu anonymisieren.

In Schritt 230 wird eine Zuordnung zwischen Datensätzen aus den produktiven Datenbanken 14 einerseits und Datensätzen aus der nicht-produktiven Datenbank 22 andererseits erzeugt. Verschiedene hierfür geeignete Zuordnungsmechanismen werden weiter unter ausführlicher erläutert.

In Schritt 240 erzeugt der Anonymisierungscomputer 20 einen anonymisierten Datensatz, in dem die zu anonymisierenden Datenelemente eines produktiven Datensatzes mit Datenelementen des zugeordneten Datensatzes aus der nicht-produktiven Datenbank 22 ersetzt werden. Bei einem späteren Erzeugen eines neuen Satzes anonymisierter Datensätze und/oder beim Aktualisieren der vorher erzeugten anonymisierten Datensätze bleibt die ursprüngliche Zuordnung aufrecht erhalten. Dies ist in Schritt 250 dargestellt.

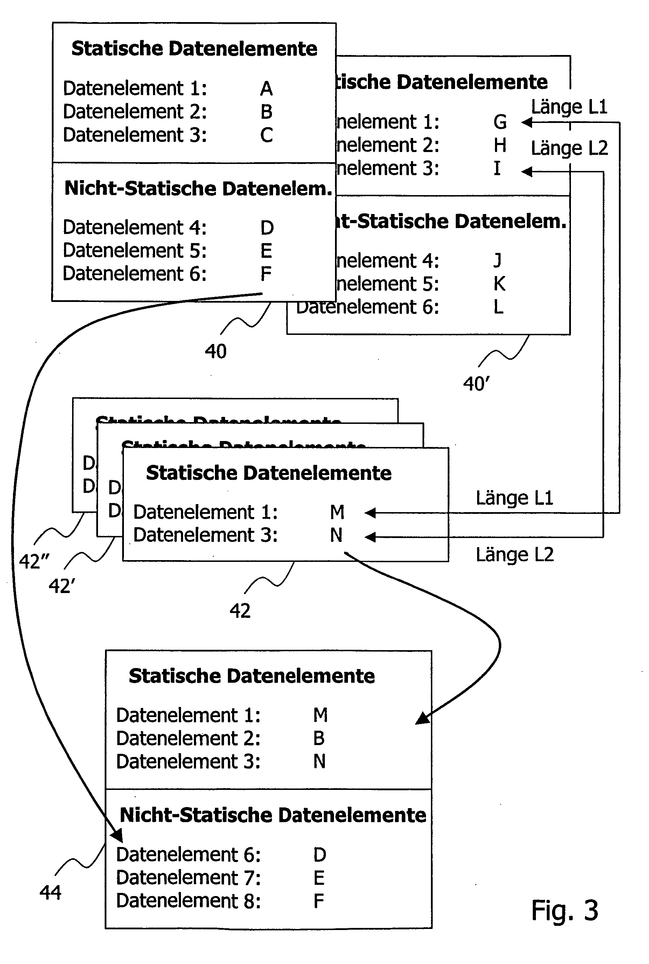

Fig. 3 zeigt eine schematische Darstellung eines Ausführungsbeispiels für die Erzeugung anonymisierter Datensätze unter Verwendung von in den produktiven Datenbanken 14 enthaltenen produktiven Datensätzen 40, 40' einerseits und von in der nicht-produktiven Datenbank 22 enthaltenen nicht-produktiven Datensätzen 42, 42', 42" andererseits.

Die in der nicht-produktiven Datenbank 22 enthaltenen Datensätze können auf unterschiedliche Art und Weise erzeugt worden sein. Gemäß einer ersten Variante wurden sämtliche Datensätze in der nicht-produktiven Datenbank 22 durch Kopieren von öffentlichen Datensätzen (oder zumindest von darin enthaltenen Datenelementen) erhalten. Gemäß einer zweiten Variante wurden sämtliche nicht-produktiven Datensätze durch Kopieren oder Historisieren (Abzug per einem bestimmten Datum) von produktiven Datensätzen (oder zumindest durch Kopieren oder Historisieren von darin enthaltenen Datenelementen) erzeugt. Gemäß einer dritten Variante umfasst die nicht-produktive Datenbank 22 Datensätze, welche hinsichtlich der darin enthaltenen Datenelemente den produktiven Datenbanken 14 und der öffentlich zugänglichen elektronischen Datenbank 24 entstammen. Nicht-produktive Datensätze mit Datenelementen aus der öffentlich zugänglichen elektronischen Datenbank 24 können somit nicht-produktiven Datensätzen mit Datenelementen aus den produktiven Datenbanken 14 zur Erhöhung des Anonymisierungsgrades beigemischt werden. Es wird auf diese Weise ein Unsicherheitsfaktor dahingehend erzeugt, dass im Entwicklungs- und Testumfeld anhand eines anonymisierten Datensatzes kein eindeutiger Rückschluss auf die produktiven Datensätze (und produktiven Datenelemente) mehr möglich ist.

In Fig. 3 oben sind exemplarisch zwei produktive Datensätze 40, 40' dargestellt. Jeder dieser Datensätze 40, 40' umfasst eine Mehrzahl produktiver Datenelemente (A, B, C, ...), die von den auf dem Anwendungs-Server 16 laufenden Anwendungsprogrammen manipuliert (erzeugt, geändert, gelöscht, usw.) und verarbeitet werden können.

Die Datenelemente sind in dem in Fig. 3 dargestellten Beispielfall in statische Datenelemente (oder Stammdaten) und nicht-statische Datenelemente (oder Bewegungsdaten) unterteilt. Bei nicht-statischen Datenelementen handelt es sich vorzugsweise um sehr kurzlebige Datenelemente, die üblicherweise lediglich für den Ablauf einer individuellen Transaktion erforderlich sind. Typische OLTP (Online Transaction Processing)-Systeme sind ausgelegt, um viele Tausende oder sogar Millionen einzelner kleiner Transaktionen pro Tag zu prozessieren. Jedenfalls in nicht-kondensierter Form sind die nicht-statischen Datenelemente daher nur kurze Zeit verfügbar (obwohl sie aus Gründen der Nachvollziehbarkeit einzelner Transaktionen in der Regel in kondensierter Form gesichert werden). Die statischen Datenelemente können im Vergleich zu lediglich transaktionsaktuellen nicht-statischen Datenelemente zeitlich deutlich langlebiger sein. Aus diesem Grund werden in der Regel viele Datensätze identische statische Datenelemente aber transaktionsbezogen unterschiedliche nicht-statische Datenelemente aufweisen. Trotz ihrer Langlebigkeit können auch die statischen Datenelemente Manipulationen unterliegen, die jedoch im Vergleich zur Lebensdauer typischer transaktionsbezogener nicht-statischer Datenelemente äußerst selten auftreten. Die statischen Datenelemente und die nicht-statischen Datenelemente eines produktiven Datensatzes können in getrennten produktiven Datenbanken enthalten und miteinander verknüpft sein. Diese Maßnahme gestattet es beispielsweise, maßgeschneiderte Datenbank- und Sicherungs-Konzepte für die unterschiedlich langlebigen Datenelemente vorzusehen. Ferner ist es denkbar, dass eine Mehrzahl von produktiven Datensätzen mit identischen statischen Datenelemente aber unterschiedlichen nicht-statischen Datenelemente existiert. In diesem Fall unterstützt die Verwendung getrennter Datenbanken, dass statische Datenelemente redundanzfrei gespeichert werden.

Bei den statischen Datenelementen handelt es sich demgemäß um solche Daten, welche von den Anwendungsprogrammen zwar verarbeitet werden, jedoch nicht oder jedenfalls nicht häufig manipuliert werden müssen. Bei einem statischen Datenelement kann es sich beispielsweise um ein Ereignis-Datum (z.B. eine Tages- oder Jahresangabe), um einen Namen, eine Adressangabe, einen Sollwert, usw. handeln. Die nicht-statischen Datenelemente werden hingegen von den auf dem Anwendungs-Server 16 laufenden Anwendungsprogrammen fortlaufend manipuliert, bilden also beispielsweise die Eingabe- oder Ausgabeparameter dieser Anwendungsprogramme. Bei dem Ausführungsbeispiel gemäß Fig. 3 wird angenommen, dass lediglich einige der statischen Datenelemente der produktiven Datensätze zu anonymisieren sind, während die nicht-statischen Datenelemente keiner Anonymisierung bedürfen und unverändert in der Entwicklungs- und Testumgebung zur Verfügung stehen sollen.

Den einzelnen Datenelementen ist jeweils eine Kennung in Form einer Zahl zwischen 1 und 6 zugeordnet. Korrespondierende Kennungen werden sowohl für die produktiven Datensätze 40, 40' als auch für die nicht-produktiven Datensätze 42, 42', 42" verwendet. Diese Vorhergehensweise ermöglicht es, zu anonymisierende produktive Datenelemente durch nicht-produktive Datenelemente mit einer korrespondierenden Kennung zu ersetzen.

Die nicht-produktiven Datensätze 42, 42', 42" umfassen im Beispielfall gemäß Fig. 3 nur solche Datenelemente, welche zum Anonymisieren der produktiven Datensätze benötigt werden. Da bei dem Ausführungsbeispiel gemäß Fig. 3 lediglich die produktiven Datenelemente mit den Kennungen 1 und 3 anonymisiert werden müssen, enthalten die nicht-produktiven Datensätze 42, 42', 42" zur Verringerung des Speicherplatzbedarfs jeweils lediglich Datenelemente mit den Kennungen 1 und 3. Gemäß einer Abwandlung des Ausführungsbeispiels gemäß Fig. 3 wäre es jedoch möglich, dass die nicht-produktiven Datensätze 42, 42', 42"dasselbe Format wie die oben erläuterten produktiven Datensätze 40, 40' aufweisen (d.h. statische und nicht-statische Datenelemente wie die produktiven Datensätze 40, 40' umfassen). In diesem Fall würden nur die zu Anonymisierungszwecken benötigten Datenelemente (hier mit den Kennungen 1 und 3) aus den nicht-produktiven Datensätzen ausgelesen und in die jeweils zu erzeugenden anonymisierten Datensätze übernommen.

Wie sich aus Fig. 3 ergibt, stimmt der nicht-produktive Datensatz 42 hinsichtlich der Zeichenkettenlängen der darin enthaltenen Datenelemente 1 und 3 mit dem produktiven Datensatz 40' überein. Mit anderen Worten, sowohl das Datenelement G mit der Kennung 1 des produktiven Datensatzes 40' als auch das Datenelement M mit der Kennung 1 des nicht-produktiven Datensatzes 42 besitzen beide die gleiche Zeichenkettenlänge L1. Ferner weisen sowohl das Datenelement I (Kennung 3) des produktiven Datensatzes 50' als auch das im Datenelement N (Kennung 3) des nicht-produktiven Datensatzes 42 jeweils die übereinstimmende Länge L2 auf. In der nicht-produktiven Datenbank 22 ist der Datensatz 42 jedoch nicht einzigartig hinsichtlich des Vorhandenseins eines Datenelements der Kennung 1 mit Länge L1 und des Datenelements 3 mit einer Länge L2. Vielmehr ist in der nicht-produktiven Datenbank 22 wenigstens ein weiterer Datensatz (z.B. Datensatz 42' und/oder Datensatz 42") vorhanden, der ebenfalls ein Datenelement der Kennung 1 mit der Länge L1 und ein Datenelement der Kennung 3 mit der Länge L2 aufweist.

Die Erzeugung eines in Fig. 3 dargestellten anonymisierten Datensatzes 44 auf der Grundlage der produktiven Datensätze 40, 40' und der nicht-produktiven Datensätze 42, 42' und 42" läuft nun folgendermaßen ab. In einem ersten Schritt wird aus den produktiven Datenbanken 14 (z.B. auf der Grundlage eines benutzerdefinierbaren Selektionsmechanismus) ein produktiver Datensatz ermittelt, der anonymisiert und als anonymisierter Datensatz in die Testdatenbank 26 übergeführt werden soll. Dies ist in Fig. 3 beispielhaft für den produktiven Datensatz 40 dargestellt. Es wird wiederum davon ausgegangen, dass die Datenelemente mit den Kennungen 1 und 3 der produktiven Datensätze zu anonymisieren sind. Bei dem Datensatz 40 gemäß Fig. 3 handelt es sich hierbei also um die Datenelemente A und C. Diese beiden Datenelemente A und C sind durch Datenelemente mit korrespondierenden Kennungen eines der nicht-produktiven Datensätze 42, 42' und 42" zu ersetzen.

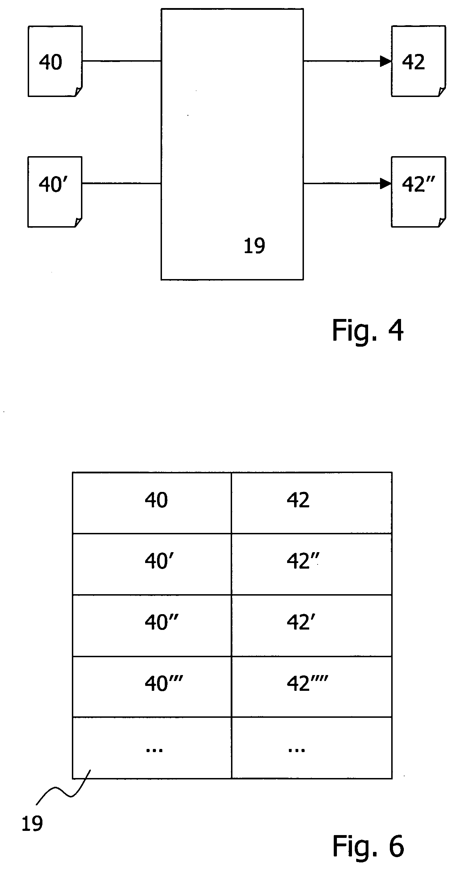

Für den aus den produktiven Datenbanken 14 herausgegriffenen produktiven Datensatz 40 ist nun in einem nächsten Schritt ein diesem Datensatz 40 zugeordneter Datensatz aus der nicht-produktiven Datenbank 22 zu ermitteln (dessen Datenelemente mit den Kennungen 1 und 3 die Datenelemente mit den korrespondierenden Kennungen des Datensatzes 40 ersetzen sollen). Bei dem in Fig. 3 dargestellten Ausführungsbeispiel ist dem produktiven Datensatz 40 der nicht-produktive Datensatz 42 zugeordnet. Diese Zuordnung erfolgt unter Verwendung der in Fig. 4 dargestellten kryptographischen Zuordnungs-Komponente 19.

Die Zuordnungs-Komponente 19 in Fig. 4 basiert auf einem kryptographischen Mechanismus wie beispielsweise dem in der US 5,214,703 oder der EP 0 482 154 beschriebenen IDEA Verschlüsselungsmechanismus. Ein solcher Mechanismus gestattet die Implementierung einer Zuordnungs-Komponente 19, welche eine einmal festgelegte Zuordnung zwischen den produktiven Datensätzen 40, 40' usw. und den nicht-produktiven Datensätzen 42, 42', 42", usw. reproduzierbar beibehält. Wie in Fig. 4 dargestellt, ordnet die Komponente 27 dem produktiven Datensatz 40 reproduzierbar den nicht-produktiven Datensatz 42 zu. Dem produktiven Datensatz 40' wird andererseits reproduzierbar der nicht-produktive Datensatz 42" zugeordnet, usw.

Die Reproduzierbarkeit der in Fig. 4 dargestellten Zuordnung ermöglicht eine Aktualisierung einzelner anonymisierter Datensätze in der Testdatenbank 26. Auf diese Weise lassen sich Datenmodifikationen im produktiven Umfeld in die Testdatenbank 26 einpflegen. Insbesondere muss gemäß diesem Aktualisierungsansatz der Inhalt der Testdatenbank 26 nicht jedes mal komplett neu erzeugt werden. Dies schont die vorhandenen Ressourcen und erhöht die Verfügbarkeit der produktiven Datenbanken 14.

Wie in Fig. 3 dargestellt, werden zur Erzeugung des anonymisierten Datensatzes 44 die Datenelemente mit den Kennungen 1 und 3 des produktiven Datensatzes 40 durch die korrespondierenden Datenelemente des nicht-produktiven Datensatzes 42 ersetzt. Genauer gesagt wird das Datenelement A durch das Datenelement M und das Datenelement C durch das Datenelement N ersetzt, um den produktiven Datensatz 40 zu anonymisieren. Die Datenelemente B, D, E und F des produktiven Datensatzes 40 bedürfen hingegen keiner Anonymisierung und werden unverändert in den anonymisierten Datensatz 44 übernommen. Deutlich zu erkennen ist in Fig. 3 der Sachverhalt, dass der anonymisierte Datensatz 44 dasselbe Format wie der produktive Datensatz 40 aufweist.

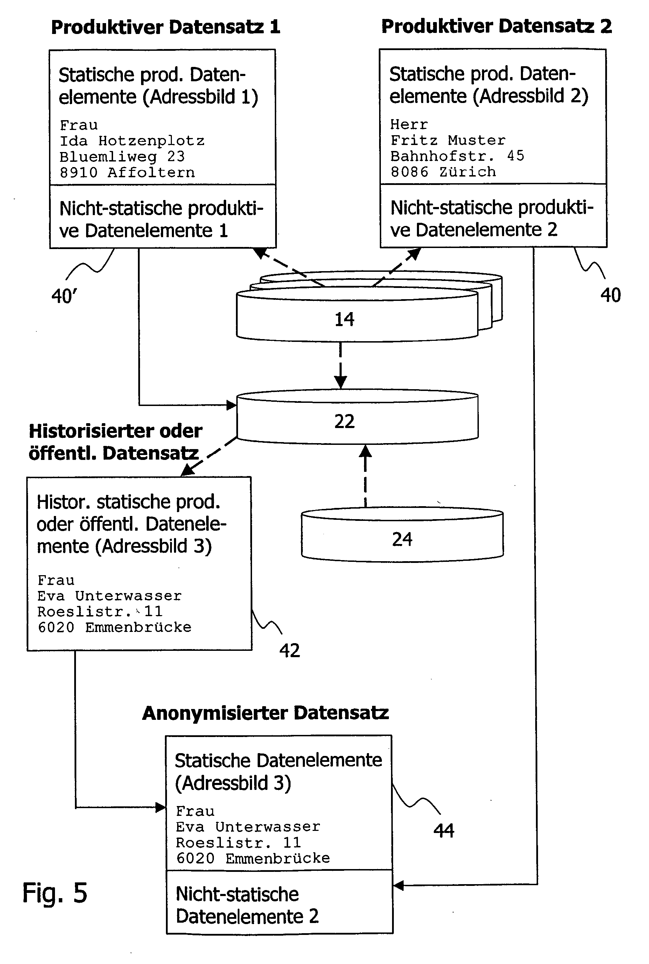

Fig. 5 zeigt in einer schematischen Darstellung ein weiteres Ausführungsbeispiel für die Erzeugung eines anonymisierten Datensatzes durch Kombination von Datenelementen eines produktiven Datensatzes mit Datenelementen eines nicht-produktiven Datensatzes.

Das in Fig. 5 gezeigte Ausführungsbeispiel betrifft das Erzeugen von anonymisierten Datensätzen für das Entwickeln und Testen von vor allem solchen Anwendungsprogrammen, welche die in den anonymisierten Datensätzen enthaltenen Datenelemente auf einer Anzeigeeinrichtung oder in Form einer Drucksache ausgeben. Genauer gesagt sollen anonymisierte Datensätze zur Verfügung gestellt werden, die das Entwickeln und Testen von adressbasierten Anwendungsprogrammen gestatten. Derartige Anwendungsprogramme dienen etwa dazu, einen adressierten Kontoauszug mit nicht-statischen produktiven Daten (wie Kontoständen, Kontoumsätzen, usw.) und statischen produktiven Daten (wie Kontonummern, Namens- und Adressangaben) zu erstellen. Es muss hierbei beispielsweise sichergestellt werden, dass sämtliche relevanten Adressangaben innerhalb eines begrenzten Sichtfensters eines Kuverts dargestellt sind. Aus diesem Grund besteht die Anforderung, dass die anonymisierten Adressbilder hinsichtlich ihrer geometrischen Abmessungen ein getreues Abbild der produktiven Adressbilder sind, um beispielsweise die relative Lage zwischen Sichtfenster und Adressaufdruck überprüfen zu können. Aufgrund der Vertraulichkeit der nicht-statischen produktiven Daten (Bankgeheimnis), dürfen jedoch nicht die produktiven Datensätze beim Erstellen von Probe-Kontoauszügen zu Entwicklungs- und Testzwecken verwendet werden. Vielmehr besteht die Aufgabe, den nicht-statischen produktiven Daten anonymisierte Adressbilder zuzuordnen.

Hierzu wird wiederum, wie in Fig. 5 dargestellt, in einem ersten Schritt eine nicht-produktive Datenbank 22 mit nicht-produktiven Datensätzen erstellt. Dies geschieht derart, dass eine benutzerselektierte Auswahl der in den produktiven Datenbanken 14 enthaltenen Adressbilder (also der statischen Datenelemente) in die nicht-produktive Datenbank 22 übergeführt (z.B. historisiert) werden. Zur Verbesserung des Anonymisierungsgrades werden ferner Adressbilder aus der öffentlich zugänglichen elektronischen Datenbank 24 (beispielsweise aus einem elektronischen Telefonbuch) in die nicht-produktive Datenbank 22 geladen. Ungefähr 10 % der Datensätze der nicht-produktiven Datenbank 22 entstammen der öffentlich zugänglichen elektronischen Datenbank 24.

Gemäß einer Variante des in Fig. 5 dargestellten Ausführungsbeispiels werden lediglich die Datenelemente Name und Vorname aus den produktiven Datenbanken 14 in die nicht-produktive Datenbank 22 übergeführt. Dort werden diese beiden Datenelemente mit Adressangaben (z.B. Strasse, Ort, usw.) kombiniert, die der öffentlich zugänglichen elektronischen Datenbank 24 entstammen können. Zusätzlich können der öffentlich zugänglichen elektronischen Datenbank 24 noch komplette Adressbilder (einschließlich Vornamen und Nachnamen) zur Erzeugung nicht-produktiver Datensätze entnommen werden. Diese Maßnahme ist insbesondere dann zweckmäßig, wenn (zusätzlich zu aus den produktiven Datenbanken 14 ausgelesenen Datenelementen) noch weitere Datenelemente benötigt werden, um zu gewährleisten, dass in der nicht-produktiven Datenbank 22 kein Datensatz mit einer eindeutigen Zeichenkettenlängenkombination auftritt.

Gemäß dem in Fig. 5 dargestellten Ausführungsbeispiel stimmen die nicht-produktiven Datensätze hinsichtlich der Zeichenkettenlängen-Statistik der Datenelemente Vorname und Nachname (entsprechende Datenelement-Kennungen finden intern Verwendung, sind in Fig. 5 aber nicht dargestellt) mit produktiven Datensätzen überein. Dies impliziert beispielsweise, dass es für das produktive Adressbild 1 des produktiven Datensatzes 40' mit einem dreizeichigen Vornamen (Ida) und einem 11 Zeichen umfassenden Nachnamen (Hotzenplotz) einen entsprechenden nicht-produktiven Datensatz 42 mit einem nicht-produktiven Adressbild gibt, das ebenfalls einen drei Zeichen umfassenden Vornamen (Eva) und einen 11 Zeichen umfassenden Nachnamen (Unterwasser) gibt. Für den zu erzeugenden anonymisierten Datensatz 44 und für Entwicklungs- und Testzwecke ist es hierbei unerheblich, ob die Datenelemente des Adressbildes des nicht-produktiven Datensatzes 42 der öffentlich zugänglichen elektronischen Datenbank 26 oder aber den produktiven Datenbanken 14 entstammen.

Ferner sind die statistischen Eigenschaften der Datensätze, Datenelemente und von Datenelementabschnitten in der nicht-produktiven Datenbank 22 den statistischen Eigenschaften der Datensätze, Datenelemente und von Datenelementabschnitte in den produktiven Datenbanken 14 weitestgehend angenähert. Dies bezieht sich beispielsweise auf die statistischen Verteilungen der Zeichenkettenlängen und auch auf die statistischen Verteilungen der Anfangsbuchstaben wenigstens der Nachnamen. Diese Maßnahme erleichtert das Entwickeln und Testen von Anwendungsprogrammen, die Sortieralgorithmen umfassen.

Zum Erzeugen des in Fig. 5 dargestellten anonymisierten Datensatzes 44 wird zunächst ein Datensatz aus den produktiven Datenbanken 14 sowie genau ein zugeordneter Datensatz aus der nicht-produktiven Datenbank 22 ermittelt. Diese Ermittlung erfolgt auf der Grundlage der in Fig. 6 dargestellten Zuordnungstabelle 19 und wird weiter unten näher beschrieben.

In dem Ausführungsbeispiel gemäß Fig. 5 ist dem produktiven Datensatz 40 der nicht-produktive Datensatz 42 zugeordnet. Der nicht-produktive Datensatz 42 umfasst (wenigstens) ein nicht-produktives historisiertes produktives oder öffentliches Adressbild, welches zur Anonymisierung des produktiven Datensatzes 40 dessen produktives Adressbild ersetzt. Der zu erzeugende anonymisierte Datensatz 44 umfasst dann neben dem aus der nicht-produktiven Datenbank 22 gelesenen Adressbild des Datensatzes 42 die nicht-statischen Datenelemente des produktiven Datensatzes 40. Erforderlichenfalls können einzelne nicht-statische produktive Datenelemente des produktiven Datensatzes 40 ebenfalls noch anonymisiert werden. Die hierzu erforderlichen (nicht-produktiven) Daten können dem nicht-produktiven Datensatz 42 entnommen oder anderweitig erzeugt werden.

Die in Fig. 6 dargestellte Zuordnungstabelle 19 wird innerhalb des produktiven Netzwerks 12 als Datei zur Verfügung gestellt. Die Zuordnungstabelle 19 kann auf verschiedene Art und Weise erzeugt werden. So kann allen oder einer Auswahl der in den produktiven Datenbanken 14 enthaltenen Datensätze jeweils ein Datensatz aus der nicht-produktiven Datenbank 22 durch Zulosen, also zufallsbasiert, zugeordnet werden. Die Ergebnisse der Zulosung werden dann in der Zuordnungstabelle 19 festgehalten. Die Felder der Zuordnungstabelle können mit eindeutigen oder nicht-eindeutigen Identifikatoren der einzelnen Datensätze gefüllt sein, also im Ausführungsbeispiel gemäß Fig. 5 beispielsweise mit eindeutigen Datensatznummern oder mit nicht-eindeutigen Datenelementen wie den Nachnamen.

Die Zuordnung kann dergestalt weitergebildet werden, dass eine (nachträgliche) Bestimmung des einem anonymisierten Datensatz oder Datenelement zugeordneten Datensatzes oder Datenelements aus den produktiven Datenbanken möglich wird. Zu diesem Zweck kann beispielsweise die in Fig. 6 dargestellte Zuordnungstabelle eine weitere Spalte umfassen, in welche der jeder Kombination aus produktivem und nicht-produktiven Datensatz zugeordnete anonymisierte Datensatz eingeschrieben wird. In der ersten Spalte der Zuordnungstabelle 19 gemäß Fig. 6 müsste daher der Identifikator des Datensatzes 44 (vgl. Fig. 5) eingetragen werden.

Wie aus der obigen Beschreibung ersichtlich wurde, gestattet die Erfindung auf einfache Weise die Erzeugung anonymisierter Datensätze aus produktiven und nicht-produktiven Datensätzen. Die anonymisierten Datensätze werden auf der Grundlage eines reproduzierbaren Zuordnungsmechanismus aktualisiert und/oder überschrieben, um die Testdaten zu pflegen. Die gepflegten Testdaten erhöhen die Zuverlässigkeit von aus Probeläufen gewonnenen Aussagen. Der reproduzierbare Zuordnungsmechanismus erleichtert zudem die Fehleranalyse, und zwar sowohl im Entwicklungs- und Testumfeld als auch im produktiven Umfeld.

Obwohl die Erfindung anhand mehrerer einzelner Ausführungsformen, die untereinander kombinierbar sind, erläutert wurde, sind zahlreiche Änderungen und Modifikationen denkbar. Die Erfindung kann daher, innerhalb des Umfangs der nachfolgenden Ansprüche, auch abweichend von den obigen Ausführungen praktiziert werden.

## Patentansprüche

1. Verfahren zum computergestützten Erzeugen von anonymisierten Datensätzen für das Entwickeln und Testen von Anwendungsprogrammen, die für den Einsatz in einem produktiven Umfeld (12) bestimmt sind, umfassend die Schritte:
- Bereitstellen wenigstens einer produktiven Datenbank (14) mit Datensätzen, welche zu anonymisierende produktive Datenelemente enthalten;
- Bereitstellen wenigstens einer nicht-produktiven Datenbank (22) mit Datenelemente enthaltenden Datensätzen;
- Erzeugen einer Zuordnung zwischen Datensätzen der nicht-produktiven Datenbank (22) und Datensätzen der produktiven Datenbank (14);
- Erzeugen anonymisierter Datensätze durch Ersetzen der zu anonymisierenden Datenelemente von Datensätzen aus der produktiven Datenbank (14) mit den Datenelementen der jeweils zugeordneten Datensätze aus der nicht-produktiven Datenbank (22), wobei die Zuordnung bei einem Erzeugen neuer anonymisierter Datensätze und/oder bei einer Aktualisierung der bereits erzeugten anonymisierten Datensätze aufrechterhalten bleibt.

2. Verfahren nach Anspruch 1, **dadurch gekennzeichnet,**
**dass** die Zuordnung eine nachträgliche Bestimmung des einem anonymisierten Datenelement oder Datensatz zugeordneten Datenelements oder Datensatzes aus der produktiven Datenbank (14) gestattet.

3. Verfahren nach Anspruch 1 oder 2, **dadurch gekennzeichnet,**
**dass** die Zuordnung innerhalb des produktiven Umfelds (12) erfolgt.

4. Verfahren nach Anspruch 3, **dadurch gekennzeichnet,**
**dass** das produktive Umfeld ein produktives Computernetzwerk (12) mit einer Mehrzahl von Netzwerk-Komponenten (18) umfasst und dass nur Netzwerk-Komponenten (18) mit einer geeigneten Autorisierung im produktiven Umfeld Zugriff auf die Zuordnung eingeräumt wird.

5. Verfahren nach Anspruch 3 oder 4, **dadurch gekennzeichnet,**
**dass** ein nicht-produktives Umfeld (27) vorgesehen ist und aus dem nicht-produktiven Umfeld (27) kein Zugriff auf die Zuordnung eingeräumt wird.

6. Verfahren nach einem der Ansprüche 1 bis 5, **dadurch gekennzeichnet, dass** die Zuordnung auf einem deterministischen Mechanismus basiert.

7. Verfahren nach Anspruch 6, **dadurch gekennzeichnet,**
**dass** die Zuordnung auf einem kryptographischen Mechanismus basiert.

8. Verfahren nach Anspruch 5 oder 6, **dadurch gekennzeichnet,**
**dass** die Zuordnung auf einer Zuordnungstabelle basiert.

9. Verfahren nach Anspruch 8, **dadurch gekennzeichnet,**
**dass** die Zuordnungstabelle zufallsbasiert erzeugt wird.

10. Verfahren nach einem der Ansprüche 1 bis 9, **dadurch gekennzeichnet, dass** die Zuordnung jedem zu anonymisierenden produktiven Datensatz genau einen nicht-produktiven Datensatz zuordnet.

11. Verfahren nach einem der Ansprüche 1 bis 10, **dadurch gekennzeichnet, dass** die anonymisierten Datensätze in regelmäßigen Zeitintervallen und/oder benutzergesteuert aktualisiert werden.

12. Verfahren nach einem der Ansprüche 1 bis 11, **dadurch gekennzeichnet, dass** die in der nicht-produktiven Datenbank (22) enthaltenen Datenelemente einen von einem Benutzer erfassbaren Bedeutungsinhalt haben.

13. Verfahren nach einem der Ansprüche 1 bis 12, **dadurch gekennzeichnet, dass** die in der produktiven und/oder die in der nicht-produktiven Datenbank (14, 22) enthaltenen Datenelemente Namens- und/oder Adressdaten enthalten.

14. Verfahren nach einem der Ansprüche 1 bis 13, **dadurch gekennzeichnet, dass** die Datenelemente in der nicht-produktiven Datenbank (22) einer öffentlich zugänglichen Datenbank (24) oder Datei entnommen wurden.

15. Computerprogrammprodukt mit Programmcodemitteln zum Durchführen des Verfahrens nach einem der Ansprüche 1 bis 14, wenn das Computerprogrammprodukt auf einem oder mehreren Computern ausgeführt wird.

16. Computerprogrammprodukt nach Anspruch 15, abgespeichert auf einem computerlesbaren Datenträger.

17. Computersystem zum Erzeugen von anonymisierten Datensätzen für das Entwickeln und Testen von Anwendungsprogrammen, die für den Einsatz in einem produktiven Umfeld (12) bestimmt sind, umfassend:
- wenigstens eine produktive Datenbank (14) mit Datensätzen, welche zu anonymisierende produktive Datenelemente enthalten;
- wenigstens eine nicht-produktive Datenbank (22) mit Datenelemente enthaltenden Datensätzen;
- einen Computer (20) zum Erzeugen anonymisierter Datensätze, wobei eine Zuordnung zwischen Datensätzen der nicht-produktiven Datenbank (22) und Datensätzen der produktiven Datenbank (14) besteht, die bei einem Erzeugen neuer anonymisierter Datensätze und/oder bei einer Aktualisierung der bereits erzeugten anonymisierten Datensätze aufrechterhalten bleibt, und wobei der Computer (20) einen anonymisierten Datensatz durch Ersetzen der zu anonymisierenden Datenelemente eines Datensatzes aus der produktiven Datenbank (14) durch die Datenelemente eines zugeordneten Datensatzes aus der nicht-produktiven Datenbank (22) erzeugt.
